# FASCICULE DE BREVET EUROPEEN

(11) **EP 3 769 374 B1**
(45) Date de publication et mention de la délivrance du brevet: **19.06.2024**
(21) Numéro de dépôt: 19712740.0
(22) Date de dépôt: 19.03.2019
(51) Int. Cl.: H01R 13/523, H01R 103/00, H01R 13/631, H01R 43/26, H02G 1/10, H02G 1/08

(54) **SYSTÈME DE MANUTENTION DE CONNECTEUR DE RACCORDEMENT DE CÂBLES SOUS-MARINS**
HANDHABUNGSSYSTEM FÜR EINEN VERBINDER, DER ZUM VERBINDEN VON UNTERWASSERKABELN KONFIGURIERT IST
HANDLING SYSTEM FOR A CONNECTOR CONFIGURED TO CONNECT UNDERWATER CABLES

(30) Priorité: 19.03.2018 FR 1852310
(43) Date de publication de la demande: 27.01.2021
(73) Titulaire: NAVAL Group, 75015 Paris (FR)
(72) Inventeur: PRISER, Mathieu, 75015 PARIS (FR); VAN DEN BROEK, Alban, 75015 PARIS (FR); LEDUC, Benoît, 75015 PARIS (FR)
(74) Mandataire: Lavoix
(86) Numéro de dépôt international: PCT/EP2019/056785
(87) Numéro de publication internationale: WO 2019/179986

(56) Documents cités:
- EP-A1- 2 886 921
- CN-A- 106 300 147
- JP-A- 2017 108 488
- US-A- 4 016 943

## Description

La présente invention concerne un système de manutention d'un connecteur de raccordement de câbles sous-marins et notamment de câbles ombilicaux pour des fermes d'énergie marine renouvelable.

Des connecteurs de raccordement de câbles sous-marins sont connus dans l'état de la technique. Des exemples de connecteurs sont décrits dans JP 2017 108488A ou dans CN 106 300 147 A.

Toutefois, leur mise à l'eau est parfois difficile à mettre en oeuvre, et implique habituellement des contraintes mécaniques, notamment de flexion, sur les équipements de protection de câble, et des contraintes mécaniques lors de l'atterrissage du connecteur sur les fonds marins.

L'invention a notamment pour but de remédier à ces inconvénients, en fournissant un connecteur de raccordement de câbles sous-marins dont la mise en eau est facilitée.

A cet effet, l'invention a notamment pour objet un système de manutention d'un connecteur de raccordement selon la revendication 1.

Le palonnier est conçu comme une part de la structure du connecteur. Il reste solidaire de ce connecteur une fois déployé, l'articulation étant protégée par un chemisage avec un palier synthétique, en plus d'un jeu important pour assurer la libre rotation du palonnier même après une immersion prolongée.

Un système de manutention selon l'invention peut présenter l'une ou plusieurs des caractéristiques suivantes, prises seules ou selon toutes combinaisons techniquement envisageables.
- Les moyens de liaison comportent des parties en saillie symétriques opposées du boîtier.
- Les branches du palonnier comportent chacune une extrémité de liaison, articulée sur le boîtier par les moyens de liaison.
- Les moyens de liaison comportent des parties en saillie symétriques opposées du boîtier, et un orifice de liaison ménagé dans chaque extrémité de liaison, chaque partie en saillie étant engagée dans un orifice de liaison respectif.
- Le connecteur de raccordement comporte au moins une masse de lestage connectée au boîtier, de préférence de manière amovible.

L'invention concerne également un système de manutention tel que défini précédemment, caractérisé en ce qu'il comporte des moyens de manoeuvre du boitier reliés au câble de manutention et une rampe courbée de déplacement du connecteur entre une première position couchée de stockage et une deuxième position dressée de mise à l'eau/récupération, par pivotement autour de l'axe des moyens de montage articulé du boîtier sur le palonnier, lors de sa manoeuvre.

Avantageusement, la rampe comporte une première portion formant rampe pour le boîtier de connexion, et de part et d'autre de celle-ci, des secondes portions courbes de guidage des moyens de montage articulés du boîtier dans le palonnier.

L'invention concerne également une plateforme navale, caractérisée en ce qu'elle comporte un système tel que défini précédemment.

L'invention sera mieux comprise à la lecture de la description qui va suivre, donnée uniquement à titre d'exemple et faite en se référant aux figures annexées, parmi lesquelles :
- la figure 1 est une vue en perspective d'un système de manutention comprenant un connecteur selon un exemple de mode de réalisation de l'invention ;
- la figure 2 est une vue du dessus d'un connecteur selon une variante de réalisation.

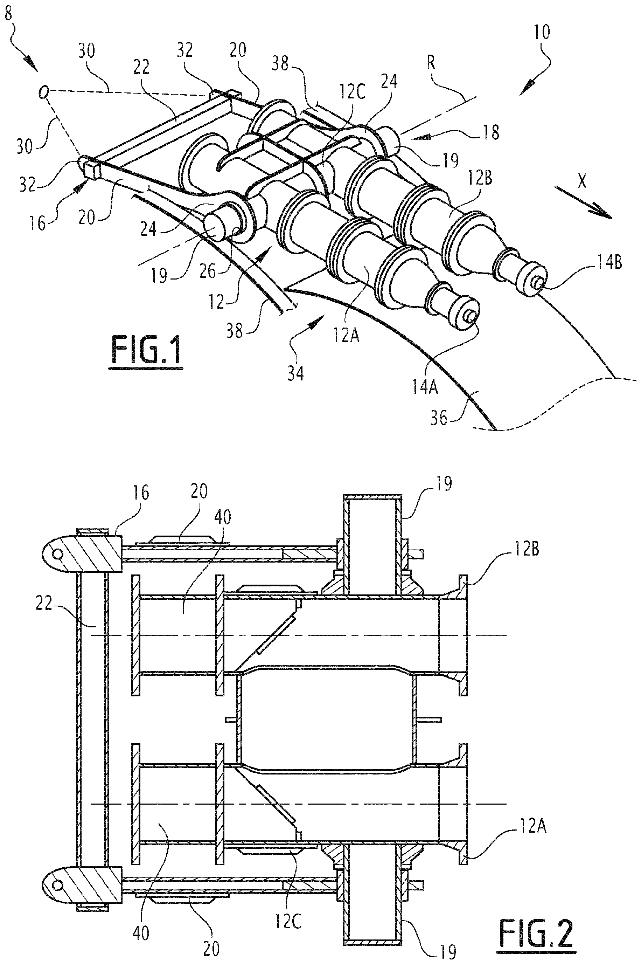

On a représenté, sur la figure 1, un système 8 de manutention d'un connecteur 10 de raccordement de câbles sous-marins, et notamment de câbles ombilicaux pour des fermes d'énergie marine renouvelable. Ce système de manutention 8 équipe une plateforme navale.

Le connecteur de raccordement 10 selon l'invention comporte un boîtier étanche désigné par la référence générale 12.

Le boîtier 12 présente une forme générale de U comprenant des première 12A et seconde 12B jambes, s'étendant sensiblement parallèlement l'une par rapport à l'autre, et parallèlement à une direction longitudinale X. Chaque jambe 12A, 12B s'étend dans la direction longitudinale X depuis une partie intermédiaire 12C jusqu'à une extrémité de connexion.

L'extrémité de connexion de la première jambe 12A, respectivement seconde jambe 12B, comporte un premier orifice 14A, respectivement second orifice 14B, de passage de câbles à raccorder.

Les câbles s'étendent dans le boîtier 12, en suivant un U depuis le premier orifice 14A, passant par la première jambe 12A, la partie intermédiaire 12C et la seconde jambe 12B, jusqu'au second orifice 14B.

Les câbles présentent à leurs extrémités des éléments de connectique électrique, optique et/ou autre.

Le connecteur 10 comporte par ailleurs un palonnier de manutention 16, relié au boîtier de connexion 12 par des moyens de liaison 18 articulés selon un axe R perpendiculaire à la première direction X.

Les moyens de liaison 18 comportent des parties en saillie 19 symétriques opposées ménagées sur le boîtier 12, et plus particulièrement sur la partie intermédiaire 12C. Chaque partie en saillie 19 présente avantageusement une forme cylindrique à section circulaire.

Le palonnier 16 présente une forme générale en U, comprenant deux branches 20 engagées de part et d'autre du boîtier 12, et reliées entre elles par une traverse 22.

Chaque branche 20 du palonnier 16 comporte une extrémité de liaison 24. Les moyens de liaison 18 comportent alors un orifice de liaison 26 ménagé dans chaque extrémité de liaison 24. Chaque partie en saillie 19 est engagée dans un orifice de liaison 26 respectif.

On notera que la distance entre les branches 20, dans une direction parallèle à l'axe R, est inférieure à la distance entre les extrémités libres des parties en saillie 19, de sorte que ces parties en saillie 19 ne peuvent pas se désengager des orifices de liaison 26. Avantageusement, la longueur de la traverse 22 est également inférieure à cette distance entre les extrémités libres des parties en saillie 19.

Par ailleurs, la longueur de chaque partie en saillie 19 est supérieure à l'épaisseur de l'extrémité de liaison 24 correspondante, de sorte que chaque partie en saillie 19 dépasse de l'extrémité de liaison 24 sur une longueur prédéfinie.

Le palonnier de manutention 16 est raccordé à au moins un câble de manutention 30 du système de manutention 8. A cet effet, le palonnier 16 comporte des organes 32 de fixation de câble, par exemple portés par la traverse 22, et selon l'invention chacun dans le prolongement d'une branche 20 respective.

Selon l'invention, le système de manutention 8 comporte deux câbles de manutention 30, s'étendant chacun entre une extrémité distale connectée à l'un respectif des organes de fixation 32 et une extrémité proximale reliée à l'autre câble de manutention 30.

Le système de manutention 8 comporte des moyens de manoeuvre du boitier 12, reliés aux câbles de manutention 30, permettant de manoeuvrer ces câbles 30.

Le système de manutention 8 comporte par ailleurs une rampe courbée 34 de déplacement du connecteur 10 entre une première position couchée de stockage et une deuxième position dressée de mise à l'eau/récupération, par pivotement autour de l'axe R des moyens de liaison 18 articulés du boîtier 12 sur le palonnier 16, lors de sa manoeuvre.

La rampe 34 comporte une première portion 36 formant rampe principale pour le boîtier de connexion 12, et, de part et d'autre de cette rampe principale 36, des secondes portions courbes 38 de guidage du boîtier 12, coopérant avec les parties en saillie 19 qui reposent chacune sur l'une respective des secondes portions 28.

Ainsi, lors de sa mise en eau, le connecteur 10 est guidé par la rampe 34 vers sa position verticale, par la manoeuvre des câbles 30. Ce guidage est rendu possible grâce à l'articulation 18 entre le palonnier 16 et le boîtier 12.

On a représenté partiellement sur la figure 2 un connecteur 10 selon une variante de réalisation de l'invention. Sur cette figure, les éléments analogues à ceux de la figure précédente sont désignés par des références identiques.

Le connecteur 10 selon cette variante diffère de celui de la figure 1 en ce qu'il comporte au moins une masse de lestage 40 connectée au boîtier 12, et plus particulièrement à la partie intermédiaire 12C. Plus particulièrement, le connecteur 10 comporte avantageusement deux masses de lestage 40, chacune dans le prolongement d'une jambe 12A, 12B.

Chaque masse de lestage 40 s'étend dans un espace libre entre la traverse 22 et la partie intermédiaire 12C. Les branches 20 sont suffisamment longues pour que les masses de lestage 40 n'entravent pas la rotation du palonnier 16 par rapport au boîtier 12.

On notera que chaque masse de lestage 40 est de préférence montée de manière amovible sur le boîtier 12, par exemple par vissage de cette masse de lestage 40 dans un logement complémentaire du boîtier 12.

Les masses de lestage 40 ont pour fonction d'assurer la stabilité hydrodynamique du connecteur 10. Les masses de lestage 40 étant montées de manière amovible, il est possible de retirer ou de remplacer aisément les masses de lestage 40, notamment pour prévoir une masse correspondant à l'application souhaitée, par exemple en choisissant une masse appropriée adaptée aux conditions de courant et de houle rencontrées.

Par ailleurs, les masses de lestages 40 peuvent être assemblées au dernier moment, ce qui facilite la manipulation du connecteur 10.

## Revendications

1. Système de manutention (8) d'un connecteur (10), le système de manutention (8) comportant le connecteur (10) de raccordement de câbles sous-marins et notamment de câbles ombilicaux pour des fermes d'énergie marine renouvelable, le connecteur (10) comportant :
- un boîtier de connexion (12) dans lequel les câbles pénètrent parallèlement l'un à l'autre et parallèlement à une première direction (X), et
- un palonnier de manutention (16), relié au boîtier de connexion (12) par des moyens de liaison (18) articulés selon un axe (R) perpendiculaire à la première direction (X),
**caractérisé en ce que** :
- le palonnier (16) présente une forme générale en U, comprenant deux branches (20) engagée de part et d'autre du boîtier (12),
- le palonnier (16) comporte des organes (32) de fixation de câble, chacun dans le prolongement d'une branche (20) respective, et **en ce que** le système de manutention (8) comporte:
- deux câbles de manutention (30) s'étendent chacun entre une extrémité distale connectée à l'un respectif des organes de fixation (32) et une extrémité proximale reliée à l'autre câble de manutention (30).

2. Système de manutention (8) selon la revendication 1, dans lequel les moyens de liaison (18) comportent des parties (19) en saillie symétriques opposées du boîtier (12).

3. Système de manutention (8) selon la revendication 1 ou 2, dans lequel les branches (20) du palonnier (16) comportent chacune une extrémité de liaison (24), articulée sur le boîtier (12) par les moyens de liaison (18).

4. Système de manutention (8) selon la revendication 3, dans lequel les moyens de liaison(18) comportent des parties (19) en saillie symétriques opposées du boîtier (12), et un orifice de liaison (26) ménagé dans chaque extrémité de liaison (24), chaque partie en saillie (19) étant engagée dans un orifice de liaison (26) respectif.

5. Système de manutention (8) selon l'une quelconque des revendications précédentes, dans lequel le palonnier de manutention (16) est raccordé aux deux câbles de manutention (30).

6. Système de manutention (8) selon l'une quelconque des revendications précédentes, comportant au moins une masse de lestage (40) connectée au boîtier (12), de préférence de manière amovible.

7. Système de manutention (8) d'un connecteur (10) selon l'une quelconque des revendications précédentes, **caractérisé en ce qu'**il comporte des moyens de manoeuvre du boitier reliés aux câbles de manutention (30) et une rampe courbée (34) de déplacement du connecteur entre une première position couchée de stockage et une deuxième position dressée de mise à l'eau/récupération, par pivotement autour de l'axe (R) des moyens de liaison (18) articulé du boîtier sur le palonnier, lors de sa manoeuvre.

8. Système selon la revendication 7, dans lequel la rampe comporte une première portion (36) formant rampe pour le boîtier de connexion, et de part et d'autre de celle-ci, des secondes portions courbes (38) de guidage des moyens de liaison (18) articulés du boîtier dans le palonnier.

9. Plateforme navale, **caractérisée en ce qu'**elle comporte un système selon la revendication 7 ou 8.

## Patentansprüche

1. Handhabungssystem (8) für einen Verbinder (10), wobei das Handhabungssystem (8) den Verbinder (10) zum Verbinden von Unterwasserkabeln und insbesondere von Versorgungskabeln für Farmen für erneuerbare Meeresenergie umfasst, wobei der Verbinder (10) umfasst:
- ein Verbindungsgehäuse (12), in das die Kabel parallel zueinander und parallel zu einer ersten Richtung (X) eindringen, und
- ein Hebegerät (16), das mit dem Verbindungsgehäuse (12) durch Verbindungsmittel (18) verbunden ist, die entlang einer Achse (R) senkrecht zur ersten Richtung (X) gelenkig angebracht sind,
**dadurch gekennzeichnet, dass**:
- das Hebegerät (16) allgemein U-förmig ist und zwei Schenkel (20) umfasst, die auf beiden Seiten des Gehäuses (12) in Eingriff stehen,
- das Hebegerät (16) Kabelbefestigungselemente (32) umfasst, die jeweils in der Verlängerung eines entsprechenden Schenkels (20) liegen, und dass das Handhabungssystem (8) umfasst:
- zwei Handhabungsseile (30) die jeweils zwischen einem distalen Ende, das mit einem jeweiligen der Befestigungselemente (32) verbunden ist, und einem proximalen Ende, das mit dem anderen Handhabungsseil (30) verbunden ist, erstrecken.

2. Handhabungssystem (8) nach Anspruch 1, bei dem die Verbindungsmittel (18) gegenüberliegende symmetrische vorstehende Teile (19) des Gehäuses (12) umfassen.

3. Handhabungssystem (8) nach Anspruch 1 oder 2, bei dem die Schenkel (20) des Hebezeugs (16) jeweils ein Verbindungsende (24) aufweisen, das durch die Verbindungsmittel (18) am Gehäuse (12) angelenkt ist.

4. Handhabungssystem (8) nach Anspruch 3, bei dem die Verbindungsmittel (18) gegenüberliegende symmetrische Vorsprünge (19) des Gehäuses (12) und eine Verbindungsöffnung (26) in jedem Verbindungsende (24) umfassen, wobei jeder Vorsprung (19) in eine entsprechende Verbindungsöffnung (26) eingreift.

5. Handhabungssystem (8) nach einem der vorhergehenden Ansprüche, bei dem das Hebegerät (16) mit den beiden Handhabungsseilen (30) verbunden ist.

6. Handhabungssystem (8) nach einem der vorhergehenden Ansprüche, das mindestens eine Ballastmasse (40) umfasst, die mit dem Gehäuse (12) verbunden ist, vorzugsweise auf lösbare Weise.

7. System (8) zur Handhabung eines Verbinders (10) nach einem der vorhergehenden Ansprüche, **dadurch gekennzeichnet, dass** es Mittel zur Handhabung des Gehäuses beinhaltet, die mit den Handhabungskabeln (30) verbunden sind, und eine gekrümmte Rampe (34) zum Verschieben der Platzierung des Verbinders zwischen einer ersten liegenden Position zur Lagerung und einer zweiten aufgerichteten Position zum Aussetzen/Bergen durch Schwenken um die Achse (R) der gelenkigen Verbindungsmittel (18) des Gehäuses am Hebegerät bei seiner Betätigung.

8. System nach Anspruch 7, bei dem die Rampe einen ersten Abschnitt (36) aufweist, der eine Rampe für das Verbindungsgehäuse bildet, und zu beiden Seiten davon zweite gekrümmte Abschnitte (38) zur Führung der gelenkigen Verbindungsmittel (18) des Gehäuses im Hebegerät.

9. Schiffsplattform, **dadurch gekennzeichnet, dass** sie ein System nach Anspruch 7 oder 8 enthält.

## Claims

1. - A handling system (8) for a connector (10), the handling system (8) comprising the connector (10) for connecting underwater cables and in particular umbilical cables for renewable marine energy farms, the connector (10) comprising:
- a connection housing (12) in which the cables enter parallel to each other and parallel to a first direction (X), and
- a handling bar (16), connected to the connection housing (12) by linking means (18) hinged along an axis (R) perpendicular to the first direction (X),
**characterized in that**:
- the bar (16) has a general U-shape, comprising two branches (20) engaged on either side of the housing (12),
- the bar (16) comprises cable fixing members (32), each in the extension of a respective branch 20,
and **in that** the handling system (8) comprises two handling cables (30) each extending between a distal end connected to one of the fixing members (32) and a proximal end connected to the other handling cable (30).

2. The handling system (8) according to claim 1, wherein the linking means (18) comprise opposing symmetrical protruding parts (19) of the housing (12).

3. The handling system (8) according to claim 1 or 2, wherein the branches (20) of the bar (16) each have a connecting end (24), hinged on the housing (12) by the linking means (18).

4. The handling system (8) according to claim 3, wherein the linking means (18) comprise opposing symmetrical protruding parts (19) of the housing (12), and a connecting orifice (26) formed in each connection end (24), each protruding part (19) being engaged in a respective connection orifice (26).

5. The handling system (8) according to any one of the preceding claims, wherein the handling bar (16) is connected to the two handling cables (30).

6. The handling system (8) according to any one of the preceding claims, comprising at least one ballast mass (40) connected to the housing (12), preferably removably.

7. The handling system (8) for a connector (10) according to any one of the preceding claims, **characterized in that** it comprises means for actuating the housing connected to the handling cables (30) and a curved ramp (34) for moving the connector between a first supine storage position and a second upright position for submersion/retrieval, by pivoting about the axis (R) of the hinged linking means (18) of the housing on the bar, during its operation.

8. The system according to claim 7, wherein the ramp comprises a first portion (36) forming a ramp for the connection housing, and on either side of the latter, second curved guide portions (38) for guiding the hinged linking means (18) of the housing on the bar.

9. - Marine platform, **characterized in that** it comprises a system according to claim 7 or 8.
